# FASCICULE DE BREVET EUROPEEN

(11) **EP 3 278 312 B1**
(45) Date de publication et mention de la délivrance du brevet: **06.11.2019**
(21) Numéro de dépôt: 16717277.4
(22) Date de dépôt: 31.03.2016
(51) Int. Cl.: G08B 13/24, G06Q 20/32

(54) **DISPOSITIF DE PROTECTION CONTRE LE VOL**
VORRICHTUNG ZUM SCHUTZ GEGEN DIEBSTAHL
DEVICE FOR PROTECTION AGAINST THEFT

(30) Priorité: 31.03.2015 FR 1552762
(43) Date de publication de la demande: 07.02.2018
(73) Titulaire: Ingenico Group, 75015 Paris (FR)
(72) Inventeur: BRIER, Eric, 26120 MALISSARD (FR); MARTINEZ, Pierre, 78620 L'etang-la-ville (FR)
(74) Mandataire: Vidon Brevets & Stratégie
(86) Numéro de dépôt international: PCT/EP2016/057142
(87) Numéro de publication internationale: WO 2016/156533

(56) Documents cités:
- EP-A1- 2 759 975
- EP-A2- 1 306 821

## Description

### 1. Domaine

La présente invention se rapporte à un dispositif de lutte contre le vol, en particulier le vol à l'étalage, en vue de protéger des articles en vente libre-service dans un établissement commercial de vente au détail, comme par exemple des articles vestimentaires du type vêtements, chaussures, de maroquinerie.

### 2. Art Antérieur

Les dispositifs antivol connus pour ces articles en vente libre-service sont le plus souvent du type macaron comprenant deux parties, une partie s'attachant après l'article à protéger et se présentant sous forme de clou piqué dans l'article et le traversant, et une autre partie accueillant la pointe du clou, et logeant le système électronique antivol et un système de verrouillage apte à retenir la pointe du clou.

Le document FR2395553 décrit par exemple un tel dispositif. L'article à protéger est ainsi traversé par un clou et pincé contre la partie opposée du dispositif retenant ledit clou. Cette même partie comporte un organe électronique antivol tel qu'un circuit électrique résonnant susceptible de répondre à la présence d'un champ magnétique, à un champ radiofréquence ou à un champ électromagnétique d'interrogation d'un système de détection extérieur. Lorsque l'article pourvu du dispositif antivol traverse une zone de contrôle ou d'interrogation, l'organe électronique du dispositif antivol coopère avec le système de détection mis en place, engendrant le déclenchement d'un signal d'alarme à la fréquence de résonance du circuit électrique du dispositif. Le retrait du dispositif antivol de l'article est effectué au moyen d'un outil de support et aimanté, sur lequel on applique la partie du dispositif pourvue du système de verrouillage du clou.

D'autres dispositifs antivol, basés sur des principes similaires, existent : ils se différentient de celui décrit précédemment par exemple par la forme du dispositif ou encore par l'utilisation ou non d'un câble flexible à la place du clou. Apparues plus récemment, des étiquettes sans contact et des étiquettes RF font également office de dispositif antivol. De telles étiquettes sont soit directement intégrées dans l'article (il s'agit par exemple d'étiquettes de vêtement cousues à l'intérieur du vêtement) soit collées sur l'article (il s'agit d'étiquettes comprenant une partie autocollante).

Ces dispositifs sont considérés comme efficaces pour limiter les vols. Ils présentent cependant un inconvénient majeur : ils nécessitent d'être désactivés par un dispositif particulier lors du passage de l'article en caisse. Plus particulièrement, pour les antivols mécaniques en deux parties tel que celui présenté dans le document FR2395553, il est nécessaire de démonter l'antivol après avoir réglé les achats en caisse. Pour les antivols de type étiquette, il est nécessaire de les soumettre à un champ magnétique plus ou moins intense provoquant leur désactivation. Ceci ne va pas sans poser des problèmes, par exemple lors des périodes de forte affluence dans les magasins (périodes de soldes ou de promotions). Le fait de devoir démonter ou désactiver l'antivol augmente de manière plus ou moins significative le temps nécessaire au passage en caisse des clients. Ceci peut engendrer de longues périodes d'attentes aux caisses. Or de nombreux clients ne sont pas nécessairement prêts à attendre aux caisses et préfèrent renoncer à l'achat plutôt que d'attendre. Il en résulte une perte de chiffre d'affaire plus ou moins significative pour le commerçant.

Le document EP 1306821 A2 (NCR INT INC [US]) du 02 mai 2003 décrit un système de paiement libre-service comprenant un système électronique de surveillance (EAS) permettant de surveille des articles en vente. Le système électronique de surveillance comprend un détecteur (étiquette) EAS et un désactivateur permettant de désactiver le détecteur EAS. Selon EP 1306821, les détecteurs EAS sont attachés aux articles en vente et le désactivateur est compris dans une machine de paiement libre-service (« a self-checkout »). La machine de paiement libre-service permet aux acheteurs de réaliser les paiements et de désactiver les détecteurs EAS attachés aux articles achetés. Ainsi, le système électronique de surveillance divulgué dans EP 1306821 comprend deux dispositifs séparés : un dispositif (détecteur EAS) est attaché à un article en vente ; un autre dispositif (désactivateur) est compris dans une machine de paiement libre-service.

Le document EP 2759975 A1 (NXP BV [NL]) du 30 juillet 2014 décrit un système d'étiquettes pour faciliter les achats des articles en vente. Selon EP 2759975 A1, le système comprend une étiquette antivol (10) et une étiquette NFC (15). L'étiquette NFC comprend des informations sur l'article en vente (par exemple le prix) auquel le système d'étiquette est attaché. Un terminal mobile ayant une interface NFC peut communiquer avec l'étiquette NFC afin d'effectuer le paiement pour acheter l'article. En outre, l'étiquette NFC est couplée avec l'étiquette antivol et est capable de désactiver l'étiquette antivol une fois que le paiement est effectué avec succès (cette désactivation s'effectuant au moyen d'un fusible, 13).

En revanche, aucun de ces deux documents ne divulgue un dispositif de protection autonome qui est désactivable en réalisant un paiement d'articles, tels que cela est décrit dans ce qui suit. Notamment les dispositifs de protection ne comprennent pas de processeur et d'alimentation autonome permettant de débloquer la protection du ou des articles à protéger.

### 3. Résumé

La technique proposée ne présente pas ces inconvénients de l'art antérieur. Plus particulièrement, la technique proposée facilite l'acte d'achat tout en évitant les vols. La technique proposée se rapporte plus particulièrement à un dispositif de protection contre le vol comprenant une fonctionnalité de paiement et/ou de déblocage automatique lorsqu'un paiement est réalisé.

Ainsi, l'acheteur potentiel peut effectuer un achat sans nécessiter d'attendre pour libérer le dispositif de protection contre le vol. Lorsque l'achat est effectué (soit par l'intermédiaire du dispositif de protection contre le vol lui-même soit par un autre intermédiaire), le dispositif de protection contre le vol se débloque, permettant ainsi à l'utilisateur de le retirer de l'article qu'il a acheté et de quitter le point de vente sans attendre. Avec le dispositif de protection contre le vol de l'invention, le point de vente ou le commerçant peut éviter une perte de chiffre d'affaire durant les périodes d'affluence et augmenter la satisfaction de clients.

Selon un mode de réalisation particulier, le dispositif de protection contre le vol est conforme à la revendication 1.

Ainsi, un tel dispositif permet de réaliser un achat sans nécessairement avoir besoin de transiter par une caisse ou un terminal de paiement. Un tel dispositif permet donc de faciliter l'acte d'achat et par la même de résoudre au moins deux problèmes que sont les délais d'attente aux caisses et la perte de chiffre d'affaire due à des tels délais d'attente aux caisses.

Selon un mode de réalisation particulier, il comprend un module de communication sans contact.

Ainsi, un tel dispositif permet de réaliser un achat en utilisant tout type de moyen de paiement sans contact, comme par exemple une carte bancaire sans contact ou un terminal mobile de paiement sans contact.

Selon un mode de réalisation particulier, il comprend en outre :
- un processeur de gestion d'au moins un mode de fonctionnement du dispositif de protection contre le vol ;
- une mémoire de stockage de données pertinentes.

Selon un mode de réalisation particulier, le processeur gère au moins deux mode de fonctionnement comprenant :
- un mode de configuration dans lequel le dispositif est à même de recevoir des données pertinentes dans la mémoire de stockage ;
- un mode de protection.

Selon un mode de réalisation particulier, le mode protection comprend un sous mode de paiement dans lequel le dispositif réalise au moins une partie d'une transaction de paiement à partir d'un moyen de paiement.

Selon un mode de réalisation particulier, le mode de protection comprend un sous mode de déblocage dans lequel le dispositif pilote l'organe de désactivation de l'organe électronique antivol, à l'aide du processeur.

Selon un mode de réalisation particulier, le mode de déblocage est activé d'au moins deux manières différentes :
- à réception d'une commande de déblocage en provenance du processeur du dispositif, cette commande de déblocage résultant d'un paiement réalisé au moins en partie, à l'aide du processeur ;
- à réception d'une commande de déblocage en provenance du processeur du dispositif, cette commande de déblocage résultant d'un paiement réalisé par un système de gestion d'un point de vente au sein duquel le dispositif de protection est positionné ;

Selon un mode de réalisation particulier, le mode de mode de protection comprend un sous mode de blocage permanent, dans lequel ledit dispositif annihile une tentative de mise en œuvre d'un autre sous mode de fonctionnement.

Ainsi, un tel dispositif permet d'éviter un vol par exemple à la suite d'une perte d'autonomie (batterie faible) ou par exemple dans des conditions de perturbations électromagnétiques importantes.

Selon un mode de réalisation particulier, il comprend en outre des moyens d'affichage d'au moins une donnée utile destinée à un consommateur.

Ainsi, un tel dispositif permet de s'assurer que l'utilisateur (le consommateur) puisse prendre connaissance des informations utiles à l'achat du produit, tel que le prix, la taille, le poids, etc.

Selon un mode de réalisation particulier, le dispositif selon la revendication 1 est intégré au sein d'un panier.

Ainsi, le dispositif de protection contre le vol comprend au moins deux modes de fonctionnement : un mode de fonctionnement dit de configuration, dans lequel le dispositif de protection contre le vol peut recevoir des données utiles et/ou nécessaires à sa fonction de paiement et/ou de déblocage et un mode de protection dans lequel le dispositif de protection contre le vol est associé à un article et est en mesure de se débloquer sur réception soit d'une commande de déblocage en provenance d'un système de paiement du point de vente, soit d'un ou plusieurs identifiants de carte bancaire valides (lorsque le dispositif intègre une fonction de paiement).

Dans ce mode de configuration, qui peut être actif par défaut dès que le dispositif n'est plus associé à un article (i.e. par exemple lorsque le clou de blocage est retiré ou lorsque le dispositif est séparé d'un autre type de moyen de blocage), le mode de protection est mis en œuvre lorsque le clou de blocage est associé au dispositif de protection contre le vol. Dans le mode de configuration, un actuateur complémentaire peut être utilisé par exemple pour que le dispositif de protection contre le vol passe dans un sous mode dit de réception de données. Dans ce mode, le dispositif est apte à recevoir des données, par exemple des données de configuration relatives au prix à payer ou encore des données de configuration relatives au type d'article ou à la taille de celui-ci. Ainsi, un tel actuateur évite au dispositif d'être en attente de données de configuration dès qu'il a été désactivé : ceci permet de prolonger la durée de vie de la batterie et d'éviter d'avoir à recharger le dispositif de manière trop fréquente.

Le dispositif comprend au moins un module de gestion d'alimentation configuré pour désactiver les fonctions de déblocage et/ou de paiement lorsque le niveau de l'alimentation électrique décroit en sous un seuil prédéterminé.

Ainsi, lorsque la batterie du dispositif descend sou un seuil donné, le dispositif de protection contre le vol passe dans un mode d'inactivité. Ce mode d'inactivité requiert un passage en caisse et un déblocage manuel. Ainsi, même lorsque l'alimentation électrique devient insuffisante, le dispositif de protection continue à assurer la fonction de protection qu'il remplit usuellement.

Ledit dispositif comprend un module de communication sans contact permettant la lecture de données, ledit module de communication sans contact permettant la lecture de données étant configuré pour obtenir des données relatives à l'article sur lequel il est placé.

Le module de communication sans contact permettant la lecture de données met en œuvre, pour la lecture des données, l'antenne de détection existante du dispositif de détection.

Ainsi, il est possible de configurer automatiquement (ou semi automatiquement) le dispositif de protection des vols en récupérant, directement sur l'article sur lequel il est installé, des données pertinentes, telles que par exemple des données relatives au prix ou des données relatives à la taille du vêtement ou d'autres données de ce type qui peuvent être présentes dans une étiquette sans contact existante sur l'article sur lequel le dispositif est installé. Dès lors, l'installation et la configuration du dispositif de protection contre le vol en est facilité.

Ainsi, il n'est pas nécessaire de disposer d'une antenne supplémentaire pour pouvoir obtenir des données sur le produit sur lequel le dispositif est installé.

Le dispositif de protection comprend un module d'affichage configuré pour afficher des données pertinentes à destination d'un utilisateur. Un tel module d'affichage peut être utilisé pour, par exemple, piloter un écran à cristaux liquides basse consommation. Cet écran peut alors afficher les données utiles pour l'utilisateur ou le consommateur telles que le prix de l'article, sa taille, ou toute autre donnée intéressante en vue de l'achat. L'écran peut aussi être utilisé pour afficher des données de configuration et ou des données relatives à la batterie. Les données pertinentes sont par exemple obtenues à partir du module de communication sans contact lorsque le dispositif de protection est placé sur l'article à protéger et que par exemple l'actuateur est actionné afin que le dispositif puisse lire les données à partir de l'étiquette sans contact déjà présente sur l'article à protéger. Les données pertinentes peuvent également être transmises à partir d'une autre interface sans fil, par exemple Zigbee, à partir du système de gestion du point de vente.

Le dispositif de protection, en mode configuration, peut par exemple, dans un mode de réalisation particulier, mettre en œuvre le procédé comprenant les étapes suivantes :
- détection du passage en mode configuration ;
- lecture, à l'aide du module de communication sans contact, d'une donnée d'identification de l'article à protéger ;
- transmission, à l'aide d'une interface de transmission sans fil (par exemple zigbee, bluetooth LE), de ladite donnée d'identification à un dispositif de gestion ;
- réception, en provenance dudit dispositif de gestion, d'au moins une donnée pertinente.

Lorsqu'un écran est disponible sur le dispositif de protection, on effectue un affichage d'au moins une donnée utile en fonction de ladite au moins une donnée pertinente reçue.

Le dispositif de protection, en mode protection, peut par exemple, dans un mode de réalisation particulier, mettre en œuvre le procédé comprenant les étapes suivantes :
- réception d'une commande de déblocage ;
- mise en œuvre des moyens de déblocage.

Ces deux étapes peuvent avantageusement être complétées par les étapes préalables de :
- réception d'une donnée d'identification d'un moyen de paiement sans contact à l'aide de l'interface de communication sans contact du dispositif de protection ;
- transmission, à un dispositif situé sur un réseau de communication, d'une donnée représentative d'un prix à payer et de la donnée d'identification du moyen de paiement ;
- mise en œuvre d'une transaction de paiement à l'aide des données précédemment transmises ;

Postérieurement à la mise en œuvre des moyens de déblocage, affichage par exemple sur les moyens d'affichage du dispositif de protection, d'une information permettant de valider le paiement. Les étapes de réception de données d'identification, de transmission de données et de mises en œuvre du paiement peuvent être réalisées sur le dispositif de protection lui-même ou bien par d'autres dispositifs connectés entre eux par l'intermédiaire d'un réseau de communications.

Selon une implémentation préférée, les différentes étapes des procédés selon la technique proposée sont mises en œuvre par un ou plusieurs logiciels ou programmes d'ordinateur, comprenant des instructions logicielles destinées à être exécutées par un processeur de données d'un module relais selon la technique proposée et étant conçu pour commander l'exécution des différentes étapes des procédés.

En conséquence, la technique proposée vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

La technique proposée vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon la technique proposée peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, la technique proposée est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout organe d'un programme ou d'un logiciel apte à mettre en œuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en œuvre ses propres modules logiciels.

Les différents modes de réalisation mentionnés ci-dessus sont combinables entre eux pour la mise en œuvre de la technique proposée.

### 4. Figures

D'autres caractéristiques et avantages de la technique proposée apparaîtront plus clairement à la lecture de la description suivante de deux modes de réalisation, donné à titre de simple exemple illustratif et non limitatif, et des dessins annexés, parmi lesquels :
- la figure la illustre un premier mode de réalisation ;

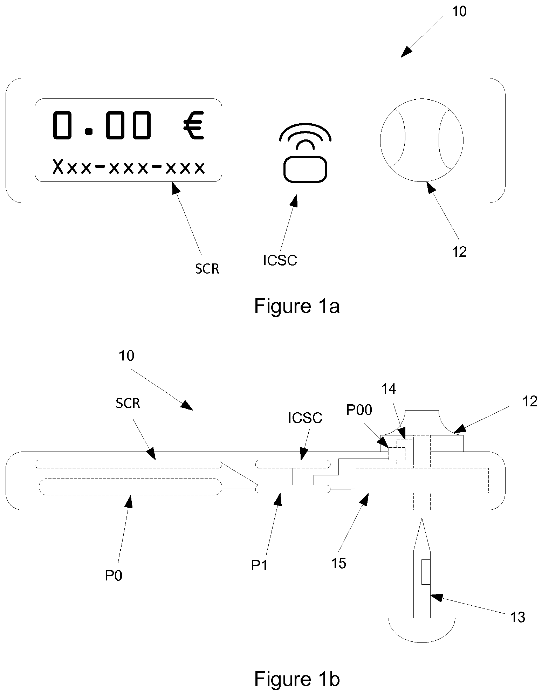

- la figure 1b illustre également le mode de réalisation de la figure 1 ;

### 5. Description

### 5.1. Rappels

A la recherche d'une solution permettant tout à la fois de protéger, contre le vol, des articles en libre-service et permettant de faciliter l'acte d'achat, les inventeurs ont donc eu l'idée d'intégrer des fonctions de paiement et/ou de déblocage, au sien d'un dispositif de protection contre le vol. Plusieurs modes de réalisation sont envisageables. Deux modes de réalisation principaux sont décrits par la suite.

Un principe général peut cependant être dégagé. Plus particulièrement, il s'agit de conditionner la désactivation de la fonction d'antivol à la mise en œuvre d'une commande de désactivation (commande faisant suite à la mise en œuvre d'un paiement par exemple). Le dispositif antivol (encore appelé dispositif de protection contre le vol ou dispositif de protection) est ainsi un dispositif intelligent qui est à même par exemple de mener lui-même une transaction de paiement et/ou par exemple de recevoir de la part d'un dispositif de paiement une commande de désactivation. Ainsi, l'antivol dispose d'une capacité de désactivation autonome, capacité matérialisée par l'utilisation d'un organe de désactivation, de moyens d'alimentation énergétiques (électriques par exemple) et des moyens de réception d'une commande de désactivation de l'organe électronique antivol. De plus, outre le fait de continuer à protéger les articles en libre-service, le dispositif de protection devient un dispositif d'aide à la vente. Comme cela est explicité par la suite, le dispositif de protection peut en effet disposer d'un écran, par exemple un écran à cristaux liquides basse consommation, lequel écran peut être utilisé pour afficher des informations utiles pour le client, comme par exemple des informations relatives au prix ou à la taille du ou des articles qui vont être achetés. Dans un premier mode de réalisation de la technique proposée, décrit par la suite, l'organe de désactivation peut débloquer un moyen de préhension (tel qu'un clou, un ressort de blocage, etc.) qui exerce une action sur un organe de blocage, afin que le dispositif puisse être ôté par un utilisateur (par exemple un consommateur ou un commerçant). Dans un deuxième mode de réalisation de la technique proposée, décrit par la suite, l'organe de désactivation peut désactiver (débloquer) un antivol (par exemple une étiquette RFID) lorsqu'il reçoit une commande pour le faire (par exemple une commande faisant suite à un paiement).

D'une manière générale, le dispositif de protection comprend, comme à l'accoutumée, un organe électronique antivol, prenant par exemple la forme d'une bobine de cuivre ou d'une antenne. Lorsque le dispositif passe une barrière de détection, il provoque une distorsion du signal (magnétique, électromagnétique, radiofréquence) émis par la barrière de protection et provoque le déclenchement d'une alarme. Le dispositif de protection comprend en outre un processeur comme par exemple un processeur sécurisé. Un tel processeur peut par exemple être embarqué dans un module de sécurisation (par exemple de type carte à circuit imprimé, Javacard) directement moulé dans le corps du dispositif de protection (tout comme l'organe électronique antivol). Ce processeur a accès à une mémoire, cette mémoire étant utilisée pour enregistrer des données pertinentes. Ces données sont par exemple le prix de l'article ou des articles, la taille, le poids, le nombre de fois ou le dispositif a été activé et désactivé. Les données pertinentes peuvent également être des clés de chiffrements, des adresses (adresses de modules de communication sans fils de type bluethooth LE, Zigbee, etc.). Certaines de ces données pertinentes sont implantées lors de la phase de fabrication du dispositif de protection, d'autres sont reçues dans une phase de configuration. Le dispositif comprend également une batterie (que celle-ci soit rechargeable ou non) assurant un apport d'énergie suffisant pour traiter les données transmises et reçues et assurant un apport d'énergie suffisant pour mettre en œuvre un éventuel module de déblocage (lorsque ce module de déblocage est présent). Le dispositif comprend également, dans au moins un mode de réalisation, un module de communication sans contact (par exemple de type NFC) permettant de recevoir, de la part d'un moyen de paiement (par exemple carte bancaire sans contact ou terminal de communication disposant d'un module de communication sans contact), les données nécessaires à la mise en œuvre d'un paiement (numéro de carte, nom du porteur, etc.).

Le dispositif de protection comprend deux modes de fonctionnement distincts : un mode de configuration dans lequel le dispositif reçoit des données pertinentes pour sa mise en fonction. Dans ce mode, le dispositif n'est pas encore utilisable pour effectuer un paiement ou pour effectuer un déblocage. Le dispositif comprend également un mode de protection dans lequel il met en œuvre, en fonction de sa configuration matérielle et logicielle, un ou plusieurs des sous modes suivants :
- un sous mode de paiement dans lequel le dispositif est à même de réaliser au moins une partie d'une transaction de paiement à partir d'un moyen de paiement (comme un moyen de paiement sans contact) ;
- un sous mode de déblocage dans lequel le dispositif est à même de débloquer un moyen de préhension (tel qu'un clou, un ressort de blocage, etc.) qui exerce une action sur l'organe de blocage, afin que le dispositif puisse être ôté par un utilisateur (par exemple un consommateur ou un commerçant) ; ce mode de déblocage peut être activé de deux manières différentes, en fonction de la situation et configuration matérielle et logicielle du dispositif de protection :
   - en recevant une commande de déblocage en provenance du processeur du dispositif, cette commande de déblocage faisant suite à un paiement réalisé au moins en partie, à l'aide du processeur ;
   - en recevant une commande de déblocage en provenance du processeur du dispositif, cette commande de déblocage faisant suite à un paiement réalisé par le système de gestion ou de commercialisation du point de vente ;
- un sous mode de blocage permanent, dans lequel le dispositif de protection se comporte comme un antivol usuel. Un tel mode est mis en œuvre lorsque le dispositif de protection de n'est plus à même de remplir correctement ses fonctions de paiement et/ou de déblocage, par exemple à la suite d'une perte d'autonomie (batterie faible) ou par exemple dans des conditions de perturbations électromagnétiques importantes.

Dans le mode de configuration, le dispositif de protection est à même de recevoir des données pertinentes. Il reçoit ces informations soit de la part d'un système de transmission sans fil (Zigbee, bluetooth) ou sans contact (NFC). Le procédé suivant est mis en œuvre :
- détection du passage en mode configuration ; cette détection peut être faite par exemple en utilisant un actuateur (tel qu'un interrupteur physique ou logiciel) ;
- obtention des données pertinentes.

L'obtention des données pertinentes peut être mise en œuvre d'au moins deux manières différentes. Une première méthode comprend :
- lecture, à l'aide du module de communication sans contact du dispositif de protection, d'une donnée d'identification de l'article à protéger (donnée contenue par exemple dans une étiquette sans contact déjà présente sur l'article à protéger) ;
- transmission, à l'aide d'une interface de transmission sans fil (par exemple zigbee, bluetooth, bluetooth LE), de ladite donnée d'identification à un dispositif de gestion ;
- réception, en provenance dudit dispositif de gestion, d'au moins une donnée pertinente.

Lorsqu'un écran est disponible sur le dispositif de protection, affichage d'au moins une donnée utile en fonction de ladite au moins une donnée pertinente reçue.

Une deuxième méthode comprend la réception, en provenance d'un dispositif de configuration (de type terminal mobile ou ordinateur portable), des données pertinentes précités et l'enregistrement de ces données dans la mémoire du dispositif antivol.

D'une manière générale, les méthodes suivantes sont mises en œuvre. Le dispositif de protection, en mode configuration, peut par exemple, dans un mode de réalisation particulier, mettre en œuvre le procédé comprenant les étapes suivantes :
- détection du passage en mode configuration ;
- lecture, à l'aide du module de communication sans contact, d'une donnée d'identification de l'article à protéger ;
- transmission, à l'aide d'une interface de transmission sans fil (par exemple zigbee, bluetooth LE), de ladite donnée d'identification à un dispositif de gestion ;
- réception, en provenance dudit dispositif de gestion, d'au moins une donnée pertinente.

Lorsqu'un écran est disponible sur le dispositif de protection, on effectue un affichage d'au moins une donnée utile en fonction de ladite au moins une donnée pertinente reçue.

Le dispositif de protection, en mode protection, peut par exemple, dans un mode de réalisation particulier, mettre en œuvre le procédé comprenant les étapes suivantes :
- réception d'une commande de déblocage ;
- mise en œuvre des moyens de déblocage.

Ces deux étapes peuvent avantageusement être complétées par les étapes préalables de :
- réception d'une donnée d'identification d'un moyen de paiement sans contact à l'aide de l'interface de communication sans contact du dispositif de protection ;
- transmission, à un dispositif situé sur un réseau de communication, d'une donnée représentative d'un prix à payer et de la donnée d'identification du moyen de paiement ;
- mise en œuvre d'une transaction de paiement à l'aide des données précédemment transmises ;

Par la suite, on décrit deux modes de réalisation différents du dispositif de protection.

### 5.2. Descriptions d'un premier mode de réalisation

Dans ce premier mode de réalisation, décrit en relation avec les figures la et 1b, la technique est matérialisée sous la forme d'un antivol (10) de forme globalement parallélépipédique rectangle et de forme allongée, et disposant, sur l'une de ses extrémités, d'un orifice (11) et ou d'une proéminence (12) permettant de recevoir la pointe d'un clou (13). Cette proéminence (12), lorsqu'elle existe comprend par exemple un système de retenu du clou (14) qui est enfoncé dans l'orifice (11). Lorsque la proéminence n'existe pas (par exemple du fait de l'épaisseur générale du produit), le système de retenu du clou (14) est intégré à l'intérieur de l'antivol (10). La forme de l'antivol importe peu et les exemples précédents ne sont donnés qu'à titre indicatif. Outre le système de retenu du clou, l'antivol comprend également classiquement une bobine (15), par exemple de fil de cuivre, ladite bobine étant utilisée pour provoquer une perturbation dans un champ magnétique (ou électrique, ou radio fréquence ou électromagnétique, etc.) lorsque l'antivol traverse des portiques de détection. Ce type de système est utilisé, avec des variantes, depuis de nombreuses années pour détecter le passage de l'antivol et déclencher une sirène et/ou un affichage lumineux.

Dans ce mode de réalisation, l'antivol comprend en outre un ensemble de moyens permettant de réaliser un paiement. Plus particulièrement, l'antivol comprend des moyens de déblocage autonome. Ces moyens de déblocage autonomes comprennent par exemple une source d'énergie électrique (P0) (telle qu'une batterie rechargeable) et d'un actionneur (P00) (par exemple un moteur électrique). L'actionneur (P00) est en mesure, par exemple, de modifier mécaniquement l'état d'une griffe de maintien du clou (lorsque ce système est utilisé). L'actionneur est donc alimenté par la source d'énergie électrique (P0). Il est en mesure de débloquer l'antivol. Pour ce faire l'actionneur reçoit une commande de déblocage, commande qui peut être transmise d'au moins deux manières différentes :
- dans une première variante, la commande de déblocage est transmise par l'intermédiaire d'un processeur (P1), qui est lui-même intégré à l'antivol, ce processeur étant également en charge de la réalisation d'une transaction de paiement; dans cette variante, l'antivol est donc (au moins partiellement) autonome pour la réalisation de la transaction de paiement ;
- dans une deuxième variante, la commande de déblocage est aussi transmise par l'intermédiaire d'un processeur (P1), qui est aussi intégré à l'antivol ; en revanche, ce processeur n'est pas en charge de la réalisation de la transaction de paiement. Il se contente de recevoir des commandes de la part d'un système central, par exemple un système d'encaissement et de paiement du point de vente ; le processeur de l'antivol joue alors le rôle de relai entre le système d'encaissement et de paiement du point de vente et les moyens de paiement de l'utilisateur.

Le processeur (P1) tire son alimentation électrique d'une source d'alimentation complémentaire (non représentée) ou bien de la batterie du dispositif (P0).

Ainsi en fonction des variantes, soit l'antivol peut directement être utilisé pour réaliser un paiement, soit il peut être utilisé pour mettre en œuvre un déblocage.

La mise en œuvre du paiement, *dans la première variante,* comprend l'utilisation, par l'antivol, d'une interface de communication sans contact (ICSC), laquelle interface permet de lire des données en provenance d'un moyen de paiement sans contact (par exemple une carte bancaire ou encore un terminal mobile). Il s'agit par exemple d'une interface NFC. On note d'ailleurs que pour éviter que cette interface ne consomme la batterie de l'antivol de manière trop excessive, l'antivol dispose également d'un moyen d'activation de l'interface, ce moyen n'étant mis en œuvre que dans des conditions particulières. Lorsque ce moyen est activé, l'interface de communication sans contact (ICSC) dans l'antivol est activée et elle peut lire des données en provenance d'un moyen de paiement sans contact. Dans un mode de réalisation simple, ce moyen d'activation de l'interface de communication sans contact (ICSC) se présente sous la forme d'un bouton poussoir (non représenté), situé par exemple à côté du prix de l'article. Lorsque ce bouton est pressé, l'interface de communication sans contact est activée durant une période de temps prédéterminée (par exemple quelques secondes ou dizaines de secondes). Durant cette période, les données sans contact peuvent être reçues. Dans un autre mode de réalisation, le moyen se présente sous la forme d'un senseur de proximité, capable par exemple de détecter avec un capteur approprié, par une variation d'impédance (ou une variation de résistance) la présence d'une main ayant saisi l'antivol.

Lorsque l'interface de communication sans contact (ICSC) est activée, une transaction de paiement sans contact peut être mise en œuvre selon les normes usuelles dans le domaine (par exemple ISO 14443, qui ne sont pas l'objet de la demande de brevet). Lorsque l'antivol reçoit la confirmation du bon déroulement de la transaction (par exemple en provenance d'un serveur bancaire et/ou en provenance d'un serveur intermédiaire de traitement de transaction du commerçant) alors l'actionneur (P00) de l'antivol est mis en œuvre (pour libérer l'emprise sur le clou) par le processeur (P1) et l'utilisateur peut séparer le clou et l'antivol. L'utilisateur se débarrasse de l'antivol en le déposant dans un récipient prévu à cet effet à proximité de la sortie du magasin (par exemple à proximité des portiques de détection des vols) et peut quitter la magasin avec l'article qu'il vient de régler.

La mise en œuvre du paiement, *dans la deuxième variante,* est quelque peu différente. Une interface de communication sans contact (ICSC) est toujours utilisée. Cependant, cette interface de communication sans contact est insérée au sein d'une borne de paiement sans contact, située elle-même par exemple à proximité de la sortie du magasin (par exemple à proximité des portiques de détection des vols) ou au niveau des caisses traditionnelles. La transaction de paiement sans contact est menée à partir de la borne de paiement sans contact selon les normes usuelles dans le domaine. Lorsque la borne de paiement sans contact reçoit la confirmation du bon déroulement de la transaction (par exemple en provenance d'un serveur bancaire et/ou en provenance d'un serveur de traitement de transaction du commerçant) alors la borne de paiement sans contact transmet, à l'antivol, une commande de libération, commande traitée par le processeur (P1) de l'antivol et générant la mise en œuvre de l'actionneur (P00) afin de libérer le clou. L'utilisateur se débarrasse de l'antivol en le déposant dans un récipient prévu à cet effet à proximité de la sortie du magasin (par exemple à proximité des portiques de détection des vols) et peut quitter la magasin avec l'article qu'il vient de régler.

Accessoirement, l'antivol comprend également un écran (SCR), par exemple un écran à cristaux liquides, permettant d'afficher diverses informations en relation avec l'article auquel l'antivol est fixé. L'écran (SCR) est relié, par l'intermédiaire d'un bus d'affichage, à un processeur non représenté (qui peut être identique au processeur P1 en charge de la réalisation de la fonction de paiement et/ou de déblocage). Le processeur est lui-même relié à une mémoire (non représenté), mémoire qui comprend les informations à afficher.

En sus, dans au moins un mode de réalisation, la transmission de données entre l'antivol et les dispositifs susceptibles de communiquer avec lui (par exemple les cartes de paiements, les terminaux de communications, les bornes de paiement, etc.), est effectuée par l'intermédiaire d'une antenne formée par la bobine de cuivre servant à détecter le vol. Ainsi, on évite de devoir insérer dans l'antivol une antenne supplémentaire.

En sus, dans au moins un mode de réalisation, l'antivol peut obtenir, de la part d'une étiquette RFID, des données complémentaires. En sus, dans au moins un mode de réalisation, l'antivol peut effacer ou réinitialiser le contenu d'une étiquette RFID.

En effet, comme indiqué préalablement, une quantité non négligeable de produits (comme les produits vestimentaires) sont fabriqués en intégrant directement une étiquette RFID. Cette étiquette RFID peut avantageusement être utilisée pour stocker de l'information sur le produit (comme par exemple un code à barre, ou l'équivalent chiffré d'un code à barre) et/ou pour jouer un rôle d'antivol. Ainsi, dans un mode de réalisation, l'antivol récupère automatiquement des données en provenance d'une étiquette RFID déjà présente sur le produit. Cela permet de résoudre au moins deux problèmes supplémentaires. Le premier tient en la configuration de l'antivol lorsque celui-ci comprend un écran indiquant le prix de l'article. À partir de l'étiquette RFID, l'antivol obtient un identifiant (par exemple un code barre). L'identifiant est transmis par l'antivol à un système central (par exemple le système central de gestion du point de vente), lequel répond à l'antivol en lui transmettant le prix à afficher. Ces étapes sont mises en œuvre une fois par produit, lorsque l'antivol est attaché sur le produit. L'obtention des données en provenance du système central du point de vente peut être mise en œuvre par l'intermédiaire d'un protocole basse consommation (par exemple Zigbee) afin de prolonger au maximum la durée de vie de la batterie.

De plus, le fait que l'antivol puisse effacer ou réinitialiser le contenu d'une étiquette RFID permet de désactiver celle-ci lorsque le client a effectué son paiement. Plus précisément, l'antivol émet, toujours par l'intermédiaire de sa bobine, un champ magnétique suffisant pour effacer les données de l'étiquette et la rendre inopérante.

Dans une variante, le dispositif se présente sous la forme d'une boite ou d'un sac contenant un ou plusieurs articles insérés par le commerçant lui-même, préalablement à la mise à disposition des clients. Ce mode de réalisation convient bien aux articles qui ne peuvent pas être percés par un clou, comme par exemple les boites rigides de jeux vidéo, de vidéos (DVD, etc.) ou encore des cartes à mémoire. Le mode de fonctionnement, dans cette variante, est identique au mode de fonctionnement dans le premier mode de réalisation. Le dispositif de déblocage autonome prend alors une forme quelque peu différente.

Pour finir, dans au moins un mode de réalisation, la bobine de l'antivol est utilisée pour effectuer le rechargement de la batterie de l'antivol. Plus précisément, lorsque l'antivol est ôté de l'article qu'il protège, il est déposé, par le client ou le commerçant, dans un panier spécifiquement prévu à cet effet. Ce panier comprend une bobine inductive, alimentée par une source d'énergie, qui induit un courant dans la bobine de l'antivol, lequel courant est utilisé pour effectuer un rechargement de la batterie rechargeable de l'antivol.

### 5.3. Description d'un deuxième mode de réalisation

Dans ce deuxième mode de réalisation, le dispositif de protection prend la forme d'un contenant, de type sac ou boite. Ce deuxième mode de réalisation convient par exemple aux articles qui ne peuvent pas recevoir de dispositif de protection tel que décrit dans le premier mode de réalisation. Essentiellement, les composants du dispositif de protection dans ce deuxième mode de réalisation sont les mêmes que dans le premier mode de réalisation et leur fonctionnement est globalement identique. Ainsi, dans ce deuxième mode de réalisation, le dispositif de protection comprend un processeur, une mémoire, des interfaces de communication sans fil et sans contact, un écran, une source d'alimentation. Il ne comprend cependant pas nécessairement d'organe de blocage et de déblocage tel que décrit précédemment, puisqu'il n'est pas utilisé pour être fixé à un article en particulier. Au contraire, le dispositif de protection, dans une première variante ce deuxième mode de réalisation, est destiné à recevoir un ou plusieurs articles qu'un client ou qu'un consommateur souhaite acquérir dans un seul acte d'achat.

Pour remplacer l'organe de blocage et de déblocage décrit dans le premier mode de réalisation, un dispositif électromagnétique est utilisé. Ce dispositif possède une fonction : la première fonction est de permettre la détection, par un portique de sécurité par exemple, d'une tentative de vol du dispositif (et des éventuels articles qu'il contient). Accessoirement, ce dispositif remplit également la fonction d'inhibition des systèmes de protections existants sur les articles que l'utilisateur souhaite acheter. Comme explicité précédemment, une majorité d'article de consommation courante est désormais équipée de d'étiquettes sans contact (RFID). Elles jouent le rôle à la fois d'identificateur de produit et la fois de dispositif de protection contre le vol. Selon la technique proposée, on utilise un champ électromagnétique pour neutraliser cette étiquette sans contact *postérieurement* au paiement, par le client, des articles qu'il a disposés dans le dispositif de protection de la présente technique.

En effet, comme dans le premier mode de réalisation, dans ce mode de réalisation, l'antivol comprend un ensemble de moyens permettant de réaliser un paiement. Plus particulièrement, l'antivol comprend des moyens de neutralisation autonomes. Ces moyens de neutralisation autonomes se présentent, dans ce mode de réalisation, sous la forme d'une source d'énergie électrique (telle qu'une batterie rechargeable, qui peut être la même que celle qui est utilisée pour faire fonctionner le processeur) et d'un dispositif électromagnétique de neutralisation (par exemple une bobine de fil métallique). Le dispositif électromagnétique est en mesure par exemple d'annihiler l'étiquette sans contact en produisant un champ électromagnétique suffisamment fort. Le dispositif électromagnétique est donc alimenté par la source d'énergie électrique. Il est en mesure de débloquer l'antivol. Pour ce faire le dispositif électromagnétique reçoit une commande de déblocage, commande qui peut être transmise d'au moins deux manières différentes :
- dans une première sous variante, la commande de déblocage est transmise par l'intermédiaire d'un processeur (P1), qui est lui-même intégré à l'antivol, ce processeur étant également en charge de la réalisation d'une transaction de paiement; dans cette variante, l'antivol est donc (au moins partiellement) autonome pour la réalisation de la transaction de paiement ;
- dans une deuxième sous variante, la commande de déblocage est aussi transmise par l'intermédiaire d'un processeur (P1), qui est aussi intégré à l'antivol ; en revanche, ce processeur n'est pas en charge de la réalisation de la transaction de paiement. Il se contente de recevoir des commandes de la part d'un système central, par exemple un système d'encaissement et de paiement du point de vente ; le processeur de l'antivol joue alors le rôle de relai entre le système d'encaissement et de paiement du point de vente et les moyens de paiement de l'utilisateur.

Dans cette variante du deuxième mode de réalisation, la mise en œuvre du paiement est réalisée de la même manière que dans le premier mode de réalisation.

Dans ce deuxième mode de réalisation, le dispositif de protection contre le vol peut prendre la forme d'une boite, d'un panier, etc. Ainsi, par exemple, le panier est pris par le client à l'entrée du magasin, et permet d'y introduire des produits et de retirer les produits pour ensuite les payer. Le panier est alors « intelligent » et est en mesure, avec les moyens décrits précédemment d'effectuer un total du montant des articles qui y sont insérés; Le panier est également un antivol et c'est la carte de paiement qui libère le système antivol du panier et permet au client d'y prendre ses achats après paiement. Il peut être prévu que le panier « sonne » lorsque le client en retire un article sans que le paiement ait été effectué, ce qui suppose que le panier doit pouvoir détecter l'entrée et la sortie d'un article.

Pour résoudre ce problème, le panier est muni d'un détecteur. Un tel détecteur se présente sous la forme par exemple d'une ou de deux cellules infra rouge et d'une led infrarouge correspondante. Lorsqu'une main s'introduit dans le panier, le détecteur enregistre le passage de celle-ci. Il détecte soit l'ajout d'un article, soit le retrait d'un article. La zone d'insertion des articles dans le panier est conformée pour assurer qu'un seul article puisse être inséré (ou retiré) à la fois. Lorsque le détecteur détecte l'insertion d'un article, il déclenche la mise en œuvre d'un lecteur d'étiquettes RFID (inséré dans le panier), pour obtenir au moins le prix de l'article qui vient d'être inséré (soit en connectant à une base de données soit directement dans l'étiquette) : pour se faire, il utilise les moyens, notamment de communication et de scan décrits précédemment. Le prix est additionné au prix total des articles dans le panier. Lorsque le détecteur détecte l'enlèvement d'un article, il déclenche la mise en œuvre d'un lecteur d'étiquettes RFID (inséré dans le panier), pour obtenir au moins le prix de l'article qui vient d'être ôté (soit en connectant à une base de données soit directement dans l'étiquette) : pour se faire, il utilise les moyens, notamment de communication et de scan décrits précédemment. Le prix est soustrait au prix total des articles dans le panier.

Comme indiqué précédemment, lorsque les articles présents dans le panier ont été réglés, par exemple avec l'une des méthodes décrites précédemment, une commande de déblocage des étiquettes RFID des produits du panier est transmise. Le dispositif électromagnétique reçoit la commande de déblocage et par exemple met en œuvre une décharge électromagnétique qui entraine une désactivation des étiquettes.

## Revendications

1. Dispositif de protection contre le vol de type comprenant un organe électronique antivol, dispositif destiné à être attaché à au moins un article en vente en libre-service ou à être intégré à un panier ou un conteneur de type boite, dispositif **caractérisé en ce qu'**il comprend :
- un processeur de traitement ;
- un organe de désactivation de l'organe électronique antivol, commandé par ledit processeur de traitement ;
- des moyens d'alimentation énergétique, alimentant ledit organe de désactivation de l'organe électronique antivol ;
- au moins une interface de communication pour la réception d'une commande de désactivation de l'organe électronique antivol, ladite commande étant traitée par le processeur de traitement.

2. Dispositif selon la revendication 1, **caractérisé en ce qu'**il comprend un module de communication sans contact.

3. Dispositif selon la revendication 1, **caractérisé en ce qu'**il comprend en outre :
- une mémoire de stockage de données pertinentes, les données pertinentes appartenant au groupe comprenant des données relatives audit au moins un article, des données de configuration dudit dispositif.

4. Dispositif selon la revendication 3, **caractérisé en ce que** le processeur gère au moins deux mode de fonctionnement comprenant :
- un mode de configuration dans lequel le dispositif est à même de recevoir des données pertinentes dans la mémoire de stockage ;
- un mode de protection dans lequel ledit dispositif protège ledit au moins un article contre le vol.

5. Dispositif selon la revendication 4, **caractérisé en ce que** le mode protection comprend un sous mode de paiement dans lequel le dispositif réalise au moins une partie d'une transaction de paiement à partir d'un moyen de paiement.

6. Dispositif selon la revendication 4, **caractérisé en ce que** le mode de mode de protection comprend un sous mode de déblocage dans lequel l'organe de désactivation désactive l'organe électronique antivol, à l'aide du processeur.

7. Dispositif selon la revendication 6, **caractérisé en ce que** le mode de déblocage est activé à réception d'une commande de déblocage en provenance du processeur du dispositif, cette commande de déblocage résultant d'un paiement réalisé au moins en partie, à l'aide du processeur.

8. Dispositif selon la revendication 6, **caractérisé en ce que** le mode de déblocage est activé à réception d'une commande de déblocage en provenance du processeur du dispositif, cette commande de déblocage résultant d'un paiement réalisé par un système de gestion d'un point de vente au sein duquel le dispositif de protection est positionné.

9. Dispositif selon la revendication 4, **caractérisé en ce que** le mode de mode de protection comprend un sous mode de blocage permanent, dans lequel ledit dispositif annihile une tentative de mise en œuvre d'un autre sous mode de fonctionnement.

10. Dispositif selon la revendication 1, **caractérisé en ce qu'**il comprend en outre des moyens d'affichage d'au moins une donnée utile destinée à un consommateur.

11. Dispositif selon la revendication 1, **caractérisé en ce qu'**il est intégré au sein d'un panier.

## Patentansprüche

1. Vorrichtung zum Schutz gegen Diebstahl des Typs, umfassend ein elektronisches Diebstahlsicherungsorgan, Vorrichtung, die dazu bestimmt ist, an mindestens einem Selbstbedienungs-Verkaufsartikel angebracht zu werden oder in einem Korb oder einem Behälter des Typs einer Box integriert zu werden, Vorrichtung, **dadurch gekennzeichnet, dass** sie aufweist:
- einen Verarbeitungsprozessor,
- ein Organ zum Deaktivieren des elektronischen Diebstahlsicherungsorgans, das durch den Verarbeitungsprozessor gesteuert ist,
- Energieversorgungsmittel, die das Organ zum Deaktivieren des elektronischen Diebstahlsicherungsorgans speisen,
- mindestens eine Kommunikationsschnittstelle für das Empfangen eines Befehls zum Deaktivieren des elektronischen Diebstahlsicherungsorgans, wobei der Befehl von dem Verarbeitungsprozessor verarbeitet wird.

2. Vorrichtung nach Anspruch 1, **dadurch gekennzeichnet, dass** es ein kontaktloses Kommunikationsmodul aufweist.

3. Vorrichtung nach Anspruch 1, **dadurch gekennzeichnet, dass** er ferner aufweist:
- einen Speicher zum Speichern von relevanten Daten, wobei die relevanten Daten zu einer Gruppe gehören, die Daten in Bezug auf den mindestens einen Artikel, Konfigurationsdaten der Vorrichtung aufweisen.

4. Vorrichtung nach Anspruch 3, **dadurch gekennzeichnet, dass** der Prozessor mindestens zwei Betriebsarten verwaltet, umfassend:
- einen Konfigurationsmodus, bei dem die Vorrichtung in der Lage ist, relevante Daten in dem Speicher zu empfangen,
- einen Schutzmodus, bei dem die Vorrichtung den mindestens einen Artikel vor Diebstahl schützt.

5. Vorrichtung nach Anspruch 4, **dadurch gekennzeichnet, dass** der Schutzmodus einen Zahlungs-Untermodus aufweist, bei dem die Vorrichtung mindestens einen Teil einer Zahlungstransaktion ausgehend von einem Zahlungsmittel durchführt.

6. Vorrichtung nach Anspruch 4, **dadurch gekennzeichnet, dass** der Schutzmodus einen Freigabe-Untermodus aufweist, bei dem das Organ zum Deaktivieren das elektronische Diebstahlsicherungsorgan mit Hilfe des Prozessors deaktiviert.

7. Vorrichtung nach Anspruch 6, **dadurch gekennzeichnet, dass** der Freigabemodus beim Empfangen eines Freigabebefehls von dem Prozessor der Vorrichtung aktiviert wird, wobei sich dieser Freigabebefehl aus einer Zahlung ergibt, die mindestens teilweise mit Hilfe des Prozessors durchgeführt wird.

8. Vorrichtung nach Anspruch 6, **dadurch gekennzeichnet, dass** der Freigabemodus beim Empfangen eines Freigabebefehls von dem Prozessor der Vorrichtung aktiviert wird, wobei sich dieser Freigabebefehl aus einer Zahlung ergibt, die durch ein Verwaltungssystem einer Verkaufsstelle durchgeführt wird, in der die Schutzvorrichtung positioniert ist.

9. Vorrichtung nach Anspruch 4, **dadurch gekennzeichnet, dass** der Schutzmodus einen permanenten Freigabe-Untermodus aufweist, bei dem die Vorrichtung einen Versuch des Umsetzens eines anderen Betriebs-Untermodus vereitelt.

10. Vorrichtung nach Anspruch 1, **dadurch gekennzeichnet, dass** sie ferner Mittel zum Anzeigen von mindestens einem Nutzdatum aufweist, das für einen Verbraucher bestimmt ist.

11. Vorrichtung nach Anspruch 1, **dadurch gekennzeichnet, dass** sie in einem Korb integriert ist.

## Claims

1. Antitheft protection device of the type comprising an electronic antitheft element, the device being intended to be attached to at least one article in a self-service sale or to be integrated into a basket or box-type container, the device being **characterized in that** it comprises:
- a processor;
- an element for deactivating the electronic antitheft element controlled by said processor;
- energy supply means powering said element for deactivating the electronic antitheft element;
- at least one communications interface for receiving a command to deactivate said electronic antitheft element, said command being processed by the processor.

2. Device according to claim 1, **characterized in that** it further comprises a contactless communications module.

3. Device according to claim 1, **characterized in that** it further comprises:
- a storage memory for storing relevant data, the relevant data belonging to the group comprising data relating to at least one article, data on the configuration of said device.

4. Device according to claim 3, **characterized in that** the processor manages at least two modes of operation comprising:
- a configuration mode in which the device can receive relevant data in the storage memory;
- a protection mode in which said device protects said at least one article against theft.

5. Device according to claim 4, **characterized in that** the mode protection comprises a payment sub-mode in which the device carries out at least one part of a payment transaction using a payment means.

6. Device according to claim 4, **characterized in that** the protection mode comprises an unlocking sub-mode in which said deactivating element deactivates the electronic antitheft element by means of the processor.

7. Device according to claim 6, **characterized in that** the unlocking mode is activated upon reception of an unlocking command coming from the processor of the device, this unlocking command resulting from a payment made at least partly, by means of the processor.

8. Device according to claim 6, **characterized in that** the unlocking mode is activated upon reception of an unlocking command coming from the processor of the device, this unlocking command resulting from a payment made by a system for managing a sales point within which the protection device is positioned.

9. Device according to claim 4, **characterized in that** the protection mode comprises a permanent locking sub-mode in which said device cancels out an attempt to implement another mode of operation.

10. Device according to claim 1, **characterized in that** it further comprises at least one piece of useful data intended for a consumer.

11. Device according to claim 1, **characterized in that** it is integrated into a basket.
